# DEMANDE DE BREVET EUROPEEN

(11) **EP 4 841 601 A1**
(43) Date de publication de la demande: **18.11.2026**
(21) Numéro de dépôt: 26177302.2
(22) Date de dépôt: 07.05.2026
(51) Int. Cl.: G08B 21/02, G08B 21/04, G08B 1/08, G08B 13/16, G08B 25/00

(54) **SYSTÈME ET PROCÉDÉ DE SURVEILLANCE ACOUSTIQUE, PROGRAMME D'ORDINATEUR CORRESPONDANT**

(30) Priorité: 12.05.2025 FR 2505014
(71) Demandeur: ORIKIO, 29200 Brest (FR)
(72) Inventeur: DEBUNNE, Gilles, 29200 Brest (FR); CREFF, Jordan, 29200 Brest (FR); DEMANGE, Guillaume, 29200 Brest (FR); LE GLEAU, Tangui, 29200 Brest (FR)
(74) Mandataire: Bonnet, Michel

(57) **Abrégé**

Ce système de surveillance acoustique (18) comporte une interface (40) de réception d'une pluralité d'extraits sonores (Si) fournis par au moins un capteur acoustique disposé dans une zone à surveiller (Z) et des moyens (60) d'analyse d'extraits sonores (Si) pour la génération d'alertes (Aj). Il comporte en outre des moyens de déduplication (62) conçus pour regrouper au moins une partie des extraits sonores reçus ou des alertes (Aj) engendrées par les moyens d'analyse (60) en fonction d'au moins un critère de similarité sonore, de manière à constituer un nombre réduit de groupe(s) d'extraits sonores ou d'alertes, et pour déterminer un extrait sonore consolidé ou une alerte consolidée (CAk) pour chaque groupe constitué.

## Description

La présente invention concerne un système de surveillance acoustique, un procédé de surveillance acoustique mis en œuvre par ce système et un programme d'ordinateur comprenant des instructions pour la mise en œuvre d'un tel procédé de surveillance acoustique lorsqu'il est exécuté par le système.

Ce type de système de surveillance est conçu pour recevoir des extraits sonores fournis par au moins un capteur acoustique disposé dans une zone à surveiller, par exemple un lieu de vie collectif de personnes fragilisées et/ou âgées nécessitant une surveillance attentive et une intervention en cas de détection de problème ou anomalie. Dans ce cas, plusieurs capteurs acoustiques sont avantageusement répartis dans plusieurs espaces privatifs et communs de la zone à surveiller. Généralement, l'analyse approfondie des sons captés pour la détection d'une anomalie, pour le déclenchement d'une alerte et pour la prise d'une éventuelle décision d'intervention n'est pas réalisée localement mais à distance par un serveur de surveillance doté de moyens de calculs conséquents et éventuellement mutualisés entre plusieurs zones à surveiller. Chaque capteur acoustique est alors intégré dans un objet communicant ou connecté, par exemple compatible avec la technologie loT (de l'anglais « Internet of Things ») selon laquelle cet objet est localement muni d'un capteur, de moyens de traitement limités et de moyens de transmission de données issues du capteur vers le serveur distant via un réseau local ou le réseau Internet.

La surveillance acoustique, par rapport aux autres technologies possibles telles que la vidéo, les dispositifs portables ou les boutons d'appels, présente l'avantage de ne pas être trop intrusive, ainsi que d'être à coûts abordables et apte à déclencher des alertes en temps réel. La surveillance vidéo présente l'avantage d'apporter une information visuelle détaillée permettant d'affiner l'analyse d'une situation qui peut parfois être complexe à interpréter acoustiquement, mais elle présente l'inconvénient de poser des problèmes d'atteinte à la vie privée, de coûts élevés et de dépendance à des conditions d'éclairage et de champ de visibilité. Les dispositifs portables présentent l'avantage de fournir des informations personnalisées et directement sensibles à la mobilité des personnes qui les portent, mais ils présentent l'inconvénient de dépendre fortement de leur conformité avec les personnes qui doivent les porter et d'une maintenance régulière, ce qui les rend inenvisageables à grande échelle. Les boutons d'appels, bien qu'intuitifs et à coûts modérés, souffrent d'une incapacité à détecter certaines situations d'urgence grave puisqu'ils sont dépendants d'une interaction avec les personnes susceptibles de vivre ces situations d'urgence : il a par exemple été observé qu'environ 85% des personnes fragilisées et/ou âgées vivant en collectivité ne les actionnent pas dans des situations qui justifieraient pourtant l'émission d'alertes, notamment dans des situations où ces personnes sont au sol suite à une chute.

La surveillance acoustique trouve ainsi un équilibre entre praticité et efficacité. Grâce à des capteur acoustiques, par exemple de simples microphones, placés stratégiquement dans les pièces de vie privative et les couloirs communs d'un établissement collectif pour personnes fragilisées et/ou âgées, elle peut détecter des informations sonores clés, telles que des appels à l'aide ou des bruits anormaux, et alerter des soignants en temps réel.

L'invention s'applique donc plus particulièrement à un système de surveillance acoustique, comportant :
- une interface de réception d'une pluralité d'extraits sonores fournis par au moins un capteur acoustique disposé dans une zone à surveiller ; et
- des moyens d'analyse d'extraits sonores pour la génération d'alertes.

De plus en plus, les moyens d'analyse comportent un module logiciel d'intelligence artificielle à au moins un moteur d'apprentissage automatique qui reçoit les extraits sonores en entrée pour fournir en sortie une reconnaissance par classification de ces extraits, au moins une classe étant prévue pour la génération d'alertes. Dans une application médicale pour laquelle la surveillance relève de l'établissement d'un diagnostic, un exemple de tel système est détaillé dans le document de brevet EP 3 762 942 B1. Dans une autre application de surveillance à distance de soins apportés à des personnes vulnérables pour laquelle la surveillance relève de la détection de mauvais traitement éventuellement subis par ces personnes, un autre exemple de tel système est détaillé dans le document de brevet US 2022/0108704 A1.

Toutefois, cette approche acoustique n'est pas sans poser de problèmes, notamment parce qu'elle est aveugle. Les alertes doivent être fiables. Même si les faux négatifs (i.e. absence d'alerte dans une situation qui le justifie pourtant) doivent être absolument évités pour des raisons évidentes de sécurité, les faux positifs (i.e. génération d'alerte dans une situation qui ne le justifie pas) peuvent engendrer des interventions inutiles ou intempestives. La principale difficulté réside dans l'ambiguïté de la source sonore ou de l'extrait sonore lui-même, qu'elle soit spatiale ou temporelle, dans certaines situations autres que celles évoquées dans les documents précités EP 3 762 942 B1 et US 2022/0108704 A1, par exemple dans un lieu de vie collectif de personnes fragilisées et/ou âgées vivant en relative autonomie, chacune ayant son lieu de vie privatif et partageant avec les autres des espaces communs. En termes d'ambiguïté spatiale, un même extrait sonore, par exemple un appel au secours, peut se répéter en se répandant dans l'espace, tout d'abord dans le lieu privatif dans lequel il se produit, mais également dans un lieu privatif voisin et/ou dans un lieu commun voisin, engendrant potentiellement autant d'alertes et autant d'interventions dont une seule est finalement pertinente. En termes d'ambiguïté temporelle, un même extrait sonore, par exemple un cri inquiétant, peut se répéter dans le temps, engendrant lui aussi potentiellement autant d'alertes et autant d'interventions dont une seule est pertinente. En termes d'ambiguïté spatiotemporelle, un même extrait sonore, par exemple un cri, peut se répéter dans le temps et dans l'espace, notamment s'il provient d'une personne qui se déplace d'un lieu à un autre dans la zone à surveiller tout en émettant successivement un même cri, engendrant lui aussi potentiellement autant d'alertes et autant d'interventions dont une seule est pertinente.

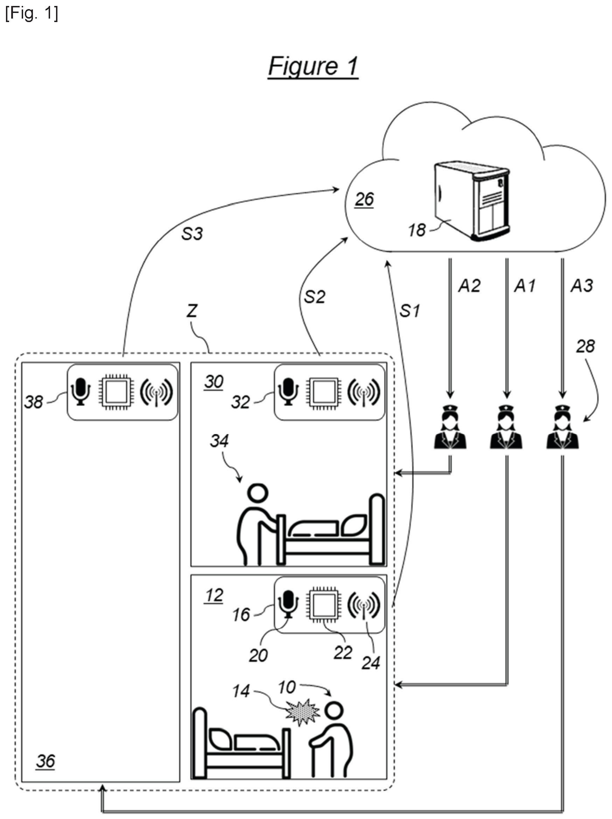

A titre d'exemple non limitatif dans un contexte applicatif également non limitatif, selon un premier scénario d'ambiguïté spatiale illustré sur la figure 1, un premier résident 10 présent dans un premier lieu privatif 12 d'une zone à surveiller Z, par exemple une résidence collective spécialisée pour personnes âgées ou vulnérables, émet un son 14 tel qu'un appel au secours.

Le premier lieu privatif 12 est équipé d'un objet communicant 16 en télécommunication avec un serveur de surveillance distant 18. L'objet communicant 16 comporte lui-même un capteur acoustique 20, par exemple un microphone, un calculateur local 22 couplé au capteur acoustique 20 et un émetteur/récepteur 24 couplé au calculateur local 22. Il est par exemple disposé au plafond du premier lieu privatif 12. Le serveur de surveillance distant 18 est quant à lui disposé hors de la zone à surveiller Z. Il peut être commun à plusieurs objets communicants disposés respectivement dans plusieurs lieux privatifs ou communs différents de la résidence collective spécialisée et placé dans un local de surveillance dédié. Dans ce cas, il est avantageusement connecté aux différents objets communicants de la résidence par un réseau local de télécommunication et/ou de transmission de données. Il peut aussi être commun à plusieurs objets communicants de plusieurs lieux privatifs ou communs différents de plusieurs résidences. Dans ce cas, il est connecté aux différents objets communicants par un réseau étendu de télécommunication et/ou de transmission de données tel qu'Internet 26. Dans tous les cas, il est doté de moyens pour enclencher une alarme ou alerter une équipe d'intervention 28 lorsqu'une anomalie est détectée.

La zone à surveiller Z comporte un deuxième lieu privatif 30, lui aussi équipé d'un deuxième objet communicant 32 similaire à l'objet communicant 16, dans lequel un deuxième résident 34 est présent. Ce deuxième lieu privatif 30 est voisin du premier lieu privatif 12. La zone à surveiller Z comporte en outre un troisième lieu d'espace commun 36, par exemple un couloir desservant notamment les lieux privatifs 12 et 30, lui aussi équipé d'un troisième objet communicant 38 similaire aux objets communicants 16 et 32. La zone à surveiller Z peut évidemment comporter bien d'autres lieux privatifs ou communs équipés d'objets communicants tels que les objets communicants 16, 32 et 38, puisqu'elle peut s'étendre à l'ensemble d'une résidence collective spécialisée comme indiqué ci-dessus.

Selon le premier scénario, le son 14 d'appel au secours émis par le premier résident 10 est perçu par le capteur acoustique 20 du premier objet communicant 16. Ce dernier transmet alors un premier extrait sonore S1 au serveur de surveillance distant 18. Mais ce son 14 se propage à travers les murs et est également perçu de façon atténuée par le capteur acoustique du deuxième objet communicant 32 disposé dans le deuxième lieu privatif 30 voisin. Le deuxième objet communicant 32 transmet alors un deuxième extrait sonore S2 au serveur de surveillance distant 18. Le même son 14 est en outre perçu de façon atténuée par le capteur acoustique du troisième objet communicant 38 disposé dans le couloir 36 voisin. Le troisième objet communicant 38 transmet alors un troisième extrait sonore S3 au serveur de surveillance distant 18.

En supposant que le premier extrait sonore S1 tel qu'analysé par le serveur de surveillance distant 18 est générateur d'une alerte, il n'y a aucune raison pour que les extraits sonores S2 et S3 qui présentent les mêmes caractéristiques, bien qu'atténuées, ne soient pas eux non plus générateurs d'alertes. Trois alertes redondantes mais indépendantes A1, A2, A3 sont alors engendrées sur la base d'un seul et même évènement sonore. De façon connue en soi, ces trois alertes indépendantes peuvent déclencher les interventions indépendantes de trois intervenants différents de l'équipe d'intervention 28, l'un se dirigeant vers le premier lieu privatif 12, les deux autres se dirigeant respectivement vers les deuxième et troisième lieux privatif et commun 30, 36. Bien entendu, seule la première alerte A1 est justifiée, les deux autres A2 et A3 étant des faux positifs. Cela engendre donc une certaine confusion et de l'inefficacité. Par ailleurs, si le premier résident 10 est connu par l'équipe d'intervention 28 pour appeler à l'aide de façon intempestive lorsqu'il est dans son lieu privatif 12, alors l'intervenant appelé à se diriger vers le premier lieu privatif 12 peut finalement décider de ne pas se déplacer. En revanche, les deux autres ne pourront pas prendre une telle décision compte tenu de l'origine différente des extraits sonores associés aux alertes A2 et A3.

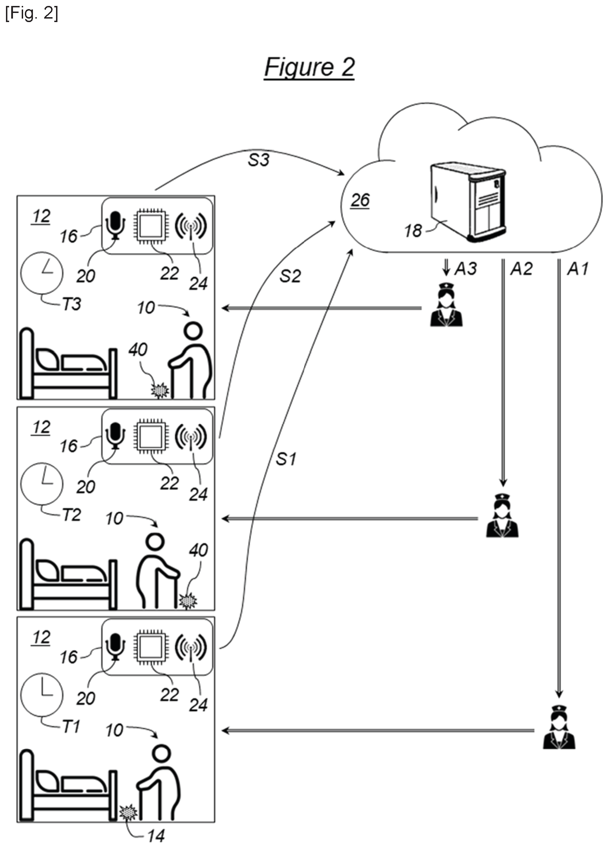

A titre d'exemple non limitatif également, selon un deuxième scénario d'ambiguïté temporelle illustré sur la figure 2, le premier résident 10 présent dans le premier lieu privatif 12 de la zone à surveiller Z émet le son 14, mais cette fois-ci sous la forme d'une succession de coups au sol à l'aide de sa canne.

Selon ce deuxième scénario, le son 14 de coups au sol émis par le premier résident 10 à un instant T1 est perçu par le capteur acoustique 20 du premier objet communicant 16. Ce dernier transmet alors un premier extrait sonore S1 au serveur de surveillance distant 18. Mais le son 14, i.e. la même succession de coups au sol ou une succession de coups tout à fait similaire, est répété par le premier résident 10 à un instant T2 alors qu'il est toujours présent dans le premier lieu privatif 12. **Il** est de nouveau perçu par le capteur acoustique 20 du premier objet communicant 16. Ce dernier transmet alors un deuxième extrait sonore S2 au serveur de surveillance distant 18. Ce son 14, i.e. la même succession de coups au sol ou une succession de coups tout à fait similaire, est encore répété par le premier résident 10 à un instant T3 alors qu'il est toujours présent dans le premier lieu privatif 12. Il est de nouveau perçu par le capteur acoustique 20 du premier objet communicant 16. Ce dernier transmet alors un troisième extrait sonore S3 au serveur de surveillance distant 18.

En supposant que le premier extrait sonore S1 tel qu'analysé par le serveur de surveillance distant 18 est générateur d'une alerte, il n'y a aucune raison pour que les extraits sonores suivants S2 et S3 qui présentent les mêmes caractéristiques, ou des caractéristiques très proches, ne soient pas eux non plus générateurs d'alertes. Trois alertes redondantes mais indépendantes A1, A2, A3 sont alors engendrées sur la base d'un seul et même évènement sonore répété. De façon connue en soi, ces trois alertes indépendantes peuvent déclencher les interventions indépendantes de trois intervenants différents de l'équipe d'intervention 28, tous les trois étant successivement appelés aux instants T1, T2 et T3 à se diriger vers le premier lieu privatif 12. Bien entendu, seule la première alerte A1 est justifiée, les deux autres A2 et A3 étant des faux positifs. Cela engendre donc de nouveau une certaine confusion et de l'inefficacité.

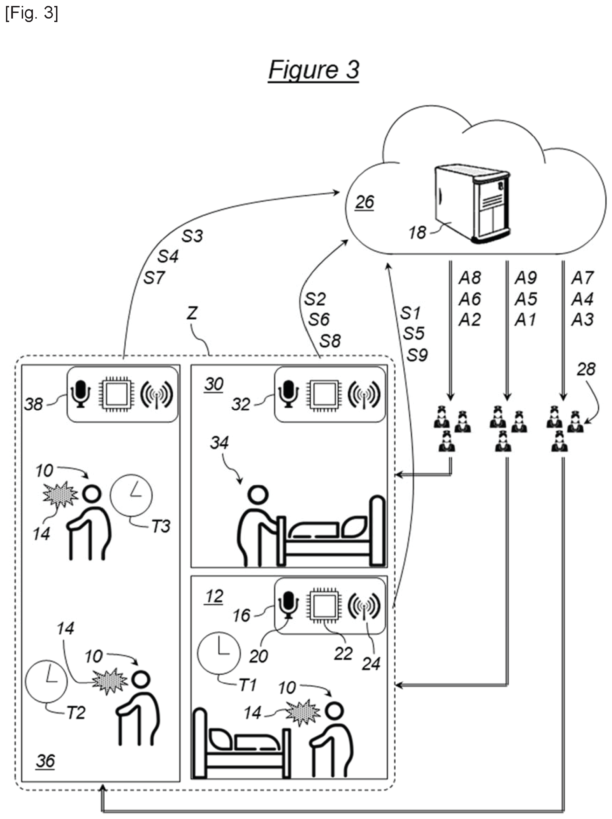

A titre d'exemple non limitatif également, selon un troisième scénario d'ambiguïté spatiotemporelle illustré sur la figure 3, le premier résident 10 présent dans le premier lieu privatif 12 de la zone à surveiller Z émet le son 14, mais cette fois-ci sous la forme d'un cri inquiétant.

Selon ce troisième scénario, le son 14 de cri inquiétant émis par le premier résident 10 à un instant T1 est perçu par le capteur acoustique 20 du premier objet communicant 16. Ce dernier transmet alors un premier extrait sonore S1 au serveur de surveillance distant 18. Mais ce son 14 se propage à travers les murs et est également perçu de façon atténuée par le capteur acoustique du deuxième objet communicant 32 disposé dans le deuxième lieu privatif 30 voisin. Le deuxième objet communicant 32 transmet alors un deuxième extrait sonore S2 au serveur de surveillance distant 18. Le même son 14 est en outre perçu de façon atténuée par le capteur acoustique du troisième objet communicant 38 disposé dans le couloir 36 voisin. Le troisième objet communicant 38 transmet alors un troisième extrait sonore S3 au serveur de surveillance distant 18.

Toujours selon ce troisième scénario, le son 14, i.e. le même cri inquiétant ou un cri inquiétant tout à fait similaire, est répété par le premier résident 10 à un instant T2 alors qu'il vient de sortir du premier lieu privatif 12 et se trouve dans le couloir 36. Il est perçu par le capteur acoustique du troisième objet communicant 38. Ce dernier transmet alors un quatrième extrait sonore S4 au serveur de surveillance distant 18. Mais ce son 14 se propage à travers les murs et est également perçu de façon atténuée par le capteur acoustique 20 du premier objet communicant 16 disposé dans le premier lieu privatif 12. Le premier objet communicant 16 transmet alors un cinquième extrait sonore S5 au serveur de surveillance distant 18. Le même son 14 est en outre perçu de façon atténuée par le capteur acoustique du deuxième objet communicant 32 disposé dans le deuxième lieu privatif 30. Le deuxième objet communicant 32 transmet alors un sixième extrait sonore S6 au serveur de surveillance distant 18.

Toujours selon ce troisième scénario, le son 14, i.e. le même cri inquiétant ou un cri inquiétant tout à fait similaire, est répété par le premier résident 10 à un instant T3 alors qu'il s'est déplacé dans le couloir 36 et se trouve à proximité du deuxième lieu privatif 30. **Il** est perçu par le capteur acoustique du troisième objet communicant 38. Ce dernier transmet alors un septième extrait sonore S7 au serveur de surveillance distant 18. Mais ce son 14 se propage à travers les murs et est également perçu de façon atténuée par le capteur acoustique du deuxième objet communicant 32 disposé dans le deuxième lieu privatif 30. Le deuxième objet communicant 32 transmet alors un huitième extrait sonore S8 au serveur de surveillance distant 18. Le même son 14 est en outre perçu de façon atténuée par le capteur acoustique 20 du premier objet communicant 16 disposé dans le premier lieu privatif 12. Le premier objet communicant 16 transmet alors un neuvième extrait sonore S9 au serveur de surveillance distant 18.

En supposant que le premier extrait sonore S1 tel qu'analysé par le serveur de surveillance distant 18 est générateur d'une alerte, il n'y a aucune raison pour que les extraits sonores suivants S2 à S9 qui présentent les mêmes caractéristiques, ou des caractéristiques très proches, ne soient pas eux non plus générateurs d'alertes. Neuf alertes redondantes mais indépendantes A1, A2, A3, A4, A5, A6, A7, A8, A9 sont alors engendrées sur la base d'un seul et même évènement sonore répété. De façon connue en soi, ces neuf alertes indépendantes peuvent déclencher les interventions indépendantes de jusqu'à neuf intervenants différents de l'équipe d'intervention 28, tous étant successivement appelés aux instants T1, T2 et T3 à se diriger vers le premier lieu privatif 12, le deuxième lieu privatif 30 et le couloir commun 36. Bien entendu, seule la première alerte A1 est justifiée, les huit autres A2 à A9 étant des faux positifs. Cela engendre donc de nouveau une certaine confusion et de l'inefficacité.

Des solutions ont été explorées pour tenter de surmonter ce genre d'ambiguïtés acoustiques. Mais elles sont généralement complexes, à l'image de la solution enseignée dans l'article de Chakraborty et al, intitulé « Joint model-based recognition and localization of overlapped acoustic events using a set of distributed small microphone arrays », publié dans arXiv.org sous la référence arXiv:1712.07065, le 19 décembre 2017. Celle-ci nécessite l'installation de réseaux distribués de petits microphones pour localiser et identifier une pluralité d'extraits sonores captés, ainsi qu'un modèle complexe d'analyse conjointe. Elle est en outre pertinente pour identifier et localiser un son dans une seule pièce, par exemple une salle de réunion, mais pas pour supprimer des ambiguïtés sonores réparties dans des zones à surveiller plus complexes.

Il peut ainsi être souhaité de prévoir un système de surveillance acoustique qui permette de s'affranchir d'au moins une partie des problèmes et contraintes précités.

**Il** est donc proposé un système de surveillance acoustique comportant :
- une interface de réception d'une pluralité d'extraits sonores fournis par au moins un capteur acoustique disposé dans une zone à surveiller ;
- des moyens d'analyse d'extraits sonores pour la génération d'alertes ; et
- des moyens de déduplication conçus pour regrouper au moins une partie des extraits sonores reçus ou des alertes engendrées par les moyens d'analyse en fonction d'au moins un critère de similarité sonore, de manière à constituer un nombre réduit de groupe(s) d'extraits sonores ou d'alertes, et pour déterminer un extrait sonore consolidé ou une alerte consolidée pour chaque groupe constitué.

Ainsi, en procédant à de simples regroupements par similarité sonore, ces regroupements pouvant concerner un ou plusieurs capteurs acoustiques, et en déterminant un extrait sonore consolidé (à analyser pour éventuellement déclencher une alerte) ou une alerte consolidée pour chaque groupe constitué, il est possible de réduire, voire même supprimer, les ambiguïtés spatiales, temporelles ou spatiotemporelles précitées. Les faux positifs évoqués précédemment sont alors efficacement évités à l'aide de moyens simples permettant notamment de se dispenser de la fourniture de plusieurs capteurs acoustiques, notamment la fourniture de réseaux de capteurs/microphones tels qu'enseignée dans l'article de Chakraborty et al, dans chaque lieu privatif ou commun de la zone à surveiller.

De façon optionnelle, un système de surveillance acoustique selon l'invention peut en outre comporter :
- ledit au moins un capteur acoustique disposé dans la zone à surveiller ; et/ou
- une interface de transmission automatique de chaque alerte issue d'un extrait sonore consolidé ou de chaque alerte consolidée à un terminal préenregistré d'un utilisateur apte à intervenir.

De façon optionnelle également, les moyens de déduplication sont conçus pour:
- regrouper plusieurs extraits sonores ou plusieurs alertes, provenant de plusieurs capteurs acoustiques respectivement disposés dans plusieurs lieux distincts de la zone à surveiller, en un même groupe d'extraits sonores ou d'alertes, lorsque lesdits extraits sonores ou lesdites alertes s'étendent en outre dans une même première fenêtre temporelle prédéterminée, par exemple une première fenêtre temporelle de 10 à 20 secondes ; et
- déterminer l'extrait sonore consolidé ou l'alerte consolidée en sélectionnant, dans chaque groupe constitué, l'extrait sonore ou l'alerte présentant un niveau sonore, un taux de confiance de classification ou un rapport signal sur bruit maximal.

De façon optionnelle également, les moyens de déduplication sont conçus pour, lorsque plusieurs extraits sonores ou plusieurs alertes issus d'un même et unique capteur acoustique parmi ledit au moins un capteur acoustique sont regroupés dans un même groupe constitué dans une deuxième fenêtre temporelle prédéterminée, par exemple une deuxième fenêtre temporelle d'au moins une heure, écarter de la détermination de l'extrait sonore consolidé ou de l'alerte consolidée de ce groupe tout extrait sonore ou toute alerte autre que celui ou celle émis en premier à partir dudit même et unique capteur acoustique.

De façon optionnelle également, ledit au moins un critère de similarité sonore appliqué par les moyens de déduplication comporte au moins l'un des éléments de l'ensemble constitué de :
- une proximité spectrale entre extraits sonores en termes d'enveloppes spectrales ;
- une proximité spectrale entre extraits sonores en termes de fréquences caractéristiques ;
- une proximité spectrale entre extraits sonores en termes d'amplitudes fréquentielles ;
- une proximité temporelle entre extraits sonores en termes d'enveloppes temporelles ;
- une proximité temporelle entre extraits sonores en termes d'amplitudes temporelles ; et
- une proximité temporelle entre extraits sonores en termes de durées.

De façon optionnelle également, un système de surveillance acoustique selon l'invention peut comporter des moyens supplémentaires de suppression d'au moins une alerte issue d'un extrait sonore consolidé ou d'au moins une alerte consolidée, cette suppression résultant de l'application de règles prédéterminées et/ou d'un apprentissage automatique.

De façon optionnelle également, les moyens de déduplication sont plus précisément conçus pour :
- regrouper au moins une partie des extraits sonores reçus en fonction dudit au moins un critère de similarité sonore, de manière à constituer un nombre de groupe(s) d'extraits sonores inférieur au nombre d'extraits sonores reçus ;
- déterminer un extrait sonore consolidé pour chaque groupe constitué ; et
- fournir chaque extrait sonore consolidé aux moyens d'analyse plutôt que chaque extrait sonore reçu.

De façon optionnelle également, le système de surveillance acoustique est conçu pour fournir tous les extraits sonores reçus aux moyens d'analyse et les moyens de déduplication sont plus précisément conçus pour :
- regrouper au moins une partie des alertes engendrées par les moyens d'analyse en fonction dudit au moins un critère de similarité sonore, ce critère de similarité sonore portant sur les extraits sonores analysés générateurs des alertes, de manière à constituer un nombre réduit de groupe(s) d'alerte(s) ;
- déterminer une alerte consolidée pour chaque groupe constitué.

De façon optionnelle également, le système de surveillance acoustique est conçu pour N capteurs acoustiques disposés dans la zone à surveiller et comporte des moyens de conservation en mémoire d'une matrice de proximité acoustique AP, dont chaque coefficient matriciel AP_{m,n}, où 1≤m≤N et 1≤n≤N, comporte au moins une valeur de probabilité qu'au moins un son prédéterminé émis à proximité du capteur acoustique Cm et principalement capté par celui-ci soit également capté par le capteur acoustique Cn, les moyens de déduplication étant conçus pour exploiter cette matrice de proximité acoustique AP pour écarter de calculs de similarité sonore certains couples de capteurs acoustiques jugés trop éloignés l'un de l'autre au vu du coefficient matriciel correspondant.

**Il** est également proposé un procédé de surveillance acoustique, comportant les étapes suivantes :
- réception d'une pluralité d'extraits sonores fournis par au moins un capteur acoustique disposé dans une zone à surveiller ;
- génération, par des moyens d'analyse d'extraits sonores d'un système de surveillance acoustique, d'alertes résultant d'au moins une partie d'extraits sonores qu'ils reçoivent ;
- regroupement, par des moyens de déduplication du système de surveillance acoustique, d'au moins une partie des extraits sonores reçus ou des alertes engendrées par les moyens d'analyse en fonction d'au moins un critère de similarité sonore, de manière à constituer un nombre réduit de groupe(s) d'extraits sonores ou d'alertes ;
- détermination, par les moyens de déduplication, d'un extrait sonore consolidé ou d'une alerte consolidée pour chaque groupe constitué.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de surveillance acoustique selon l'invention, lorsque ledit programme est exécuté par au moins un calculateur d'un système de surveillance acoustique selon l'invention.

L'invention sera mieux comprise à l'aide de la description qui va suivre, donnée uniquement à titre d'exemple et faite en se référant aux dessins annexés dans lesquels :
- la figure 1 déjà décrite, illustre un premier scénario générateur d'alertes redondantes ;
- la figure 2 déjà décrite, illustre un deuxième scénario générateur d'alertes redondantes ;
- la figure 3 déjà décrite, illustre un troisième scénario générateur d'alertes redondantes ;
- la figure 4 représente schématiquement la structure générale d'une installation à système de surveillance acoustique selon un premier mode de réalisation de l'invention ;
- la figure 5 représente schématiquement la structure générale d'une installation à système de surveillance acoustique selon un deuxième mode de réalisation de l'invention ;
- la figure 6 illustre les étapes successives d'un procédé de surveillance acoustique mis en œuvre par le système de la figure 4 ; et
- la figure 7 illustre les étapes successives d'un procédé de surveillance acoustique mis en œuvre par le système de la figure 5.

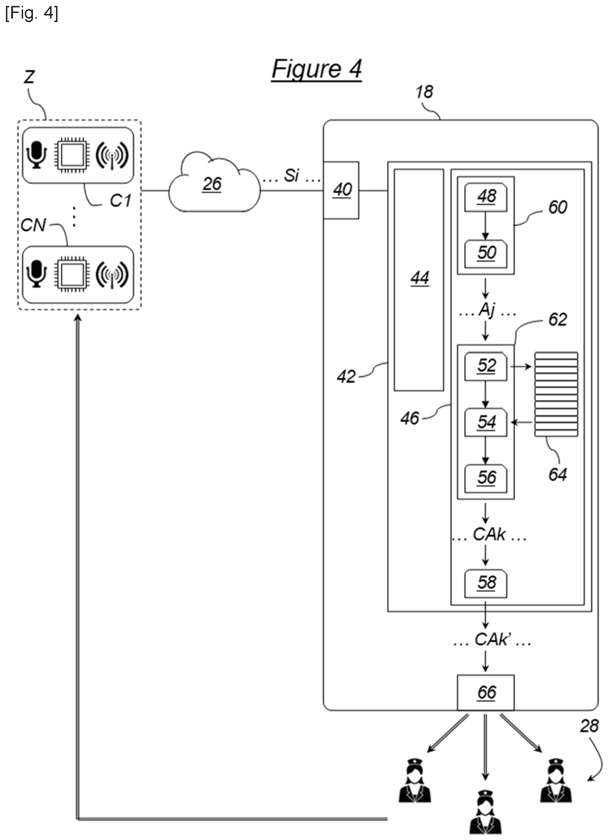

L'installation représentée schématiquement sur la figure 4 illustre de façon simplifiée la zone à surveiller Z et la pluralité d'objets communicants à capteurs acoustiques, notés de façon générique C1, ..., CN, qu'elle comporte et qui sont répartis dans les espaces communs et privatifs. Conformément aux principes généraux de la présente invention, un seul capteur acoustique, par exemple un seul microphone, peut être prévu dans chaque espace commun ou privatif de la zone à surveiller Z. Ainsi, un seul objet communicant peut être avantageusement prévu par espace commun ou privatif. Mais, en variante, les principes généraux de la présente invention ne s'opposent pas non plus à la disposition de plusieurs capteurs acoustiques et objets communicants dans un même espace communs ou privatif de la zone à surveiller Z, notamment lorsqu'il est étendu ou constitué de plusieurs pièces. Chaque capteur acoustique, tel que le capteur 20, de chaque objet communicant C1, ..., CN est fournisseur d'un signal porteur d'informations acoustiques. Ce signal est optimal en termes de contenu, puisqu'il est directement fourni par le capteur acoustique sans post-traitement particulier. Sa qualité ne dépend donc que du capteur acoustique lui-même. Il est fourni à chaque instant t, selon un échantillonnage temporel optimal prédéterminé ou de façon continue si cela est possible. Chaque calculateur local, tel que le calculateur 22, de chaque objet communicant C1, ..., CN est avantageusement conçu pour consommer peu d'énergie, notamment selon la technologie loT. Il présente donc une puissance de calcul et de mémoire limitée par rapport à celle du serveur de surveillance distant 18. En dehors de cela, il peut présenter une architecture tout à fait conventionnelle à unité de traitement (par exemple un processeur) associée à au moins une mémoire (par exemple une mémoire RAM ou autre) pour le stockage de fichiers de données et de programmes d'ordinateurs dont les instructions sont destinées à être exécutées par l'unité de traitement. Chaque calculateur local de chaque objet communicant C1, ..., CN comporte ainsi fonctionnellement plusieurs programmes d'ordinateurs ou plusieurs fonctions d'un même programme d'ordinateur pour réaliser un traitement du signal fourni par le capteur acoustique correspondant et pour fournir, en sortie de ce traitement, des extraits sonores successifs, limités temporellement, susceptibles de comporter des informations pertinentes à analyser par le serveur de surveillance 18. Il convient de noter qu'un compromis doit être trouvé sur le traitement à réaliser par chaque calculateur local, entre un traitement le plus performant possible permettant d'alléger la transmission des extraits sonores mais nécessitant un minimum de capacités locales de calcul et un traitement le plus simple possible allégeant les capacités locales de calcul nécessaires mais sollicitant davantage les capacités de transmission du réseau 26. Par ailleurs, il peut tout à fait être envisagé une interaction par boucle de rétroaction entre chaque objet communicant C1, ..., CN et le serveur de surveillance distant 18 pour paramétrer ce traitement local en fonction des besoins d'analyse du serveur qui peuvent évoluer dans le temps et selon les situations.

L'installation de la figure 4 illustre en outre de façon plus détaillée le serveur de surveillance distant 18, apte à interagir avec les objets communicants C1, ..., CN via le réseau précité 26. **Il** comporte pour cela une interface 40 de réception d'une pluralité d'extraits sonores Si fournis par les capteurs acoustiques des objets communicants C1, ..., CN après traitement par les calculateurs locaux.

**Il** comporte en outre un calculateur distant 42, avantageusement doté d'une puissance de calcul et de mémoire nettement supérieure à celle de chaque calculateur local. En dehors de cela, le calculateur distant 42 peut présenter une architecture tout à fait conventionnelle à unité de traitement 44 (par exemple un processeur) associée à au moins une mémoire 46 (par exemple une mémoire RAM ou autre). Il peut par exemple être mis en œuvre dans un dispositif informatique tel qu'un ordinateur conventionnel comportant un processeur associé à une ou plusieurs mémoires pour le stockage de fichiers de données et de programmes d'ordinateurs dont les instructions sont destinées à être exécutées par l'unité de traitement 44. Tel qu'illustré sur la figure 4, le calculateur distant 42 comporte ainsi fonctionnellement six programmes d'ordinateurs 48, 50, 52, 54, 56, 58 ou six fonctions d'un même programme d'ordinateur répartis en plusieurs modules fonctionnels logiciels. On notera en effet que les programmes d'ordinateurs 48, 50, 52, 54, 56, 58 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en œuvre le calculateur distant 42 pourrait être remplacé par un dispositif électronique composé uniquement de circuits numériques (sans programme d'ordinateur) pour la réalisation des mêmes fonctions. En variante également, au moins une partie des programmes d'ordinateurs précités pourraient être distants et accessibles par le calculateur distant 42 via Internet. D'une façon générale, même si tous les composants logiciels et de mémoire précités sont présentés comme rassemblés dans le même calculateur distant 42, ils pourraient tout aussi bien être dispersés dans des éléments matériels distincts, voire éloignés les uns des autres, mais interconnectés en réseau (bus de transmission de données, réseau local, réseau étendu, Internet, etc.).

Les programmes d'ordinateurs 48 et 50 sont inclus dans un premier module fonctionnel logiciel 60 formant des moyens d'analyse d'extraits sonores pour la génération d'alertes. Ce premier module fonctionnel d'analyse 60 est par exemple un module logiciel d'intelligence artificielle à au moins un moteur d'apprentissage automatique qui reçoit les extraits sonores en entrée pour fournir en sortie une reconnaissance par classification de ces extraits, au moins une classe étant prévue pour la génération d'alertes. En cela, il pourrait être conçu en suivant l'enseignement des documents précités EP 3 762 942 B1 et US 2022/0108704 A1. Il pourrait aussi intégrer un système expert à base de règles et moteur d'inférence. En matière d'intelligence artificielle, il pourrait aussi combiner les atouts d'au moins un moteur d'apprentissage automatique et d'un système expert.

De façon optionnelle mais astucieuse, et à titre d'exemple non limitatif, le premier module fonctionnel d'analyse 60 de la figure 4 comporte en fait :
- le programme d'ordinateur 48 comportant des instructions qui, lorsqu'elles sont exécutées par l'unité de traitement 44, implémentent au moins un premier moteur d'apprentissage automatique supervisé pour la détection de sons, ce premier moteur étant apte à détecter une ou plusieurs classes de sons, par exemple des classes de sons telles que « appel au secours », « cri », « gémissement », « chute », « vomissement », etc., à partir des extraits sonores fournis ; et
- le programme d'ordinateur 50 comportant des instructions qui, lorsqu'elles sont exécutées par l'unité de traitement 44, implémentent au moins un deuxième moteur d'apprentissage automatique supervisé pour la détection d'états, ce deuxième moteur étant apte à détecter une ou plusieurs classes d'états à partir de la ou des classes de sons détectées par le premier moteur, chaque classe d'état étant représentative d'un état d'environnement (i.e. un lieu ou une personne quelconque) dans la zone à surveiller Z, au moins l'une de ces classes d'états étant représentative d'une alerte.

Cet agencement à deux niveaux de moteurs d'apprentissage automatique supervisé ne fait pas l'objet de la présente invention, bien qu'il soit avantageusement combinable avec ses principes généraux, de sorte qu'il ne sera pas davantage détaillé.

Conformément aux principes généraux de la présente invention, les programmes d'ordinateurs 52, 54 et 56 sont inclus dans un deuxième module fonctionnel logiciel 62 formant des moyens de déduplication conçus pour :
- regrouper au moins une partie des extraits sonores Si reçus ou des alertes engendrées par le premier module fonctionnel d'analyse 60 en fonction d'au moins un critère de similarité sonore, de manière à constituer un nombre réduit de groupe(s) d'extraits sonores ou d'alertes ; et
- déterminer un extrait sonore consolidé ou une alerte consolidée pour chaque groupe constitué.

Plus précisément, dans le premier mode de réalisation illustré par la figure 4, le premier module fonctionnel d'analyse 60 est programmé pour analyser tous les extraits sonores Si reçus par l'interface 40 et engendrer, le cas échéant, des alertes Aj, le nombre d'alertes engendrées étant inférieur ou égal au nombre d'extraits sonores.

Ces alertes Aj, potentiellement redondantes au vu des scénarios possibles des figures 1 à 3, sont fournies au deuxième module fonctionnel logiciel de déduplication 62.

Le programme d'ordinateur 52 du deuxième module fonctionnel logiciel de déduplication 62 comporte des instructions qui, lorsqu'elles sont exécutées par l'unité de traitement 44, réalisent une accumulation, dans au moins une mémoire tampon 64, des alertes Aj reçues dans au moins une fenêtre temporelle prédéterminée :
- par exemple dans une même première fenêtre temporelle prédéterminée de 10 à 20 secondes lorsqu'il est souhaité de réduire ou supprimer des redondances spatiales, cette première fenêtre temporelle de durée courte permettant de tenir compte des aléas de latence du réseau 26 ainsi que des aléas d'étiquetages temporels (i.e. début, durée et/ou fin) des extraits sonores issus d'un même son 14 mais perçus par différents capteurs acoustiques respectivement disposés dans plusieurs lieux distincts de la zone à surveiller Z : cf. scénario de la figure 1 ;
- par exemple dans une même deuxième fenêtre temporelle prédéterminée d'au moins une heure lorsqu'il est souhaité de réduire ou supprimer des redondances temporelle, cette deuxième fenêtre temporelle de durée plus longue permettant de tenir compte de répétitions possibles dans le temps d'un même son capté par un même et unique capteur acoustique : cf. scénario de la figure 2 ;
- par exemple dans plusieurs fenêtres temporelles distinctes, notamment les première et deuxième fenêtres temporelles précitées, lorsqu'il est souhaité de réduire ou supprimer des redondances spatiales, temporelles et spatiotemporelles : cf. scénario de la figure 3.

Le programme d'ordinateur 54 du deuxième module fonctionnel logiciel de déduplication 62 comporte des instructions qui, lorsqu'elles sont exécutées par l'unité de traitement 44, réalisent un regroupement d'au moins une partie des alertes Aj accumulées par exécution du programme d'ordinateur 52 en fonction d'au moins un critère de similarité sonore, de manière à constituer un nombre réduit de groupe(s) d'alertes. Ce critère de similarité sonore porte sur les extraits sonores analysés respectivement générateurs des alertes accumulées. Il peut par exemple prendre la forme d'au moins l'un des critères suivants :
- une proximité spectrale entre extraits sonores en termes d'enveloppes spectrales ;
- une proximité spectrale entre extraits sonores en termes de fréquences caractéristiques ;
- une proximité spectrale entre extraits sonores en termes d'amplitudes fréquentielles ;
- une proximité temporelle entre extraits sonores en termes d'enveloppes temporelles ;
- une proximité temporelle entre extraits sonores en termes d'amplitudes temporelles ; et
- une proximité temporelle entre extraits sonores en termes de durées.

Il est appliqué par exemple à l'aide d'une valeur seuil de similarité prédéterminée au-delà de laquelle des alertes comparées sont considérées comme issues d'une même occurrence sonore. Le calcul lui-même de similarité peut se faire selon des méthodes connues telles que des méthodes à modèle d'apprentissage automatique telles que celle des plus proches voisins, des techniques d'extraction de caractéristiques avancées, la méthode de similarité cosinus, un calcul de corrélation croisée, un filtrage adapté, etc.

De façon optionnelle, un apprentissage peut être préalablement mené à l'aide de sons prédéterminés qualifiés d'opportunistes, par exemple d'amplitudes élevées ou de contenus spectraux supposés aptes à se propager facilement, pour estimer *a priori* une proximité acoustique des capteurs acoustiques respectifs des objets communicants C1, ..., CN. Le résultat de cet apprentissage peut être conservé en mémoire 46 sous la forme d'une matrice carrée de proximité acoustique notée AP, dont chaque coefficient AP_{m,n}, où 1≤m≤N et 1≤n≤N, comporte au moins une valeur de probabilité qu'au moins un son opportuniste émis à proximité du capteur acoustique de l'objet communicant Cm et principalement capté par celui-ci soit également capté par le capteur acoustique de l'objet communicant Cn. L'exploitation de cette matrice AP par le programme d'ordinateur 54 permet d'écarter des calculs de similarité certains couples d'objets communicants jugés trop éloignés l'un de l'autre au vu du coefficient matriciel correspondant, de sorte que des alertes issues de ces couples ne sont pas regroupées même pour des extraits acoustiques correspondants similaires et temporellement proches. **Il** en résulte une simplification des calculs de similarité. Mais cela permet également d'éviter certains faux négatifs, lorsque deux évènements sonores distincts mais acoustiquement proches surviennent au même moment : par exemple deux bouteilles qui tombent par terre et se cassent en même temps dans deux espaces privatifs acoustiquement éloignés de la zone à surveiller Z.

Enfin, le programme d'ordinateur 56 du deuxième module fonctionnel logiciel de déduplication 62 comporte des instructions qui, lorsqu'elles sont exécutées par l'unité de traitement 44, déterminent une alerte consolidée pour chaque groupe constitué par exécution du programme d'ordinateur 54. Cette détermination se fait par exemple par la sélection de l'une des alertes de chaque groupe, notamment celle considérée comme la plus pertinente de son groupe parce qu'elle est issue de l'extrait sonore présentant un niveau sonore maximal (i.e. volume maximal), ou un taux de classification maximal, ou un rapport signal sur bruit maximal. Cette sélection est en particulier pertinente pour éliminer les ambiguïtés spatiales sur la base de la première fenêtre temporelle définie précédemment. En complément ou indépendamment, cette détermination peut aussi se faire par exemple en écartant dans chaque groupe constitué toute alerte autre que celle émise en premier à partir d'un même et unique capteur acoustique. Ce complément d'aide à la sélection est en particulier pertinent pour éliminer les ambiguïtés temporelles sur la base de la deuxième fenêtre temporelle définie précédemment, notamment pour imposer une forme de sourdine de courte durée (i.e. celle de la deuxième fenêtre temporelle) au capteur acoustique concerné après réception d'une première alerte. **Il** est en outre envisageable de rendre la durée de cette deuxième fenêtre temporelle variable en fonction du type d'alerte et de rendre plusieurs types similaires d'alertes (par exemple une alerte de type « appel au secours » et une alerte de type « cri ») dépendants d'une même fenêtre temporelle d'observation.

Il résulte de l'exécution du programme d'ordinateur 56 la fourniture, par le deuxième module fonctionnel logiciel de déduplication 62, d'alertes consolidées CAk a *priori* moins nombreuses que les alertes Aj qu'il a reçues, et surtout beaucoup moins voire même plus du tout redondantes.

Bien entendu, si une seule alerte s'accumule dans la mémoire tampon 64, le regroupement et la sélection opérés par exécution des programmes d'ordinateurs 54, 56 sont réduits à leur plus simple expression, i.e. la restitution de cette alerte telle quelle en tant qu'alerte consolidée. De même si plusieurs alertes s'accumulent dans la mémoire tampon 64 mais qu'aucune n'est estimée similaire à une autre, le regroupement et la sélection opérés par exécution des programmes d'ordinateurs 54, 56 restituent ces alertes telles quelles en tant qu'alertes consolidées.

De façon optionnelle mais avantageuse, il peut être souhaité d'étendre temporellement et fonctionnellement la sourdine mentionnée ci-dessus. Ainsi, le programme d'ordinateur 58 comporte des instructions qui, lorsqu'elles sont exécutées par l'unité de traitement 44, sont aptes à réaliser la suppression d'au moins une alerte consolidée par application de règles prédéterminées et/ou d'un apprentissage automatique.

A titre d'exemple non limitatif, il peut être souhaité de ne plus tenir compte de certaines alertes consolidées dans certaines situations très précises qui peuvent être définies à l'aide de règles de type « si <conditions> alors <règle 1> sinon <règle 2> ». Concrètement, des alertes consolidées répétées sur plusieurs jours, ou même à l'échelle d'une ou plusieurs heures, peuvent être mises en sourdine pendant plusieurs autres jours suivants, ou plusieurs autres heures suivantes, c'est-à-dire sans déclenchement d'intervention, lorsqu'un résident dans la zone à surveiller Z atteint un nombre de déclenchements d'alertes d'un type spécifique dans une durée prédéfinie. Des valeurs de seuils variables peuvent être appliquées selon les types d'alertes. Par exemple : « s'il y a plus de 7 alertes de type « cri » par jour provenant d'une même personne sur 4 jours consécutifs, alors toute alerte de type « cri » provenant de cette personne est mise en sourdine à partir du 5^{e} jour pendant une durée prédéterminée ».

D'une façon plus générale, un modèle à base de règles peut être utilisé pour représenter des situations récurrentes et choisir une alerte qui représentera au mieux un évènement donné durant lequel plusieurs alertes auront été engendrées.

Par exemple, à partir d'une situation normale, sans alerte, une génération d'alertes successives peut faire augmenter une mesure de gravité d'une situation, qui est alors utilisée pour décider de leur traitement, conformément à :
- une première phase de montée pendant laquelle on agrège des extraits sonores afin de déterminer si un évènement en cours mérite d'être transformé en alerte : cette phase est particulièrement utile pour agréger des signaux faibles qui, pris individuellement, auraient pu être ignorés ; elle permet également de traiter des alertes génératrices de faux positifs (i.e. à ignorer) mais dont une répétition resserrée est le signe d'un évènement en cours qui mérite une certaine attention (par exemple, une gêne respiratoire ou le son d'une machine) ; les alertes peuvent être regroupées par leur type (i.e. des pleurs, gémissements ou appels vocaux), contribuant ainsi ensemble à une même mesure de gravité ;
- l'atteinte d'une valeur de mesure de gravité suffisante, impliquant alors la désignation de l'une des alertes reçues comme la représentante de l'évènement et sa transmission, ou la mise en sourdine de l'ensemble de la séquence d'alertes dans le cas contraire ;
- une mise en sourdine pendant une période incompressible après transmission de l'alerte désignée comme représentante, cette mise en sourdine dépendant des types d'alertes ultérieures, celles étant de type connexe se voyant appliquer la mise en sourdine mais pas les autres (par exemple la détection d'une chute à transmettre après plusieurs cris successifs dont seul le premier est transmis sous forme d'alerte) ;
- la prise en compte de rapprochements dans le temps d'alertes et de leurs types pour décider si elles font partie d'un même évènement ou pas, lorsque ce dernier se prolonge.

A titre d'exemple non limitatif également, la mise en sourdine peut être adaptative et évolutive en faisant appel à un moteur d'apprentissage automatique, de manière à s'ajuster automatiquement sur les habitudes de chaque résident de la zone à surveiller Z. En d'autres termes, si un son est reconnu comme habituel pour un résident, par exemple une toux fréquente ou un bruit répétitif, le moteur d'apprentissage automatique l'identifie, grâce à un modèle d'apprentissage formé à l'aide de données labellisées, comme non critique et supprime l'alerte consolidée résultant de ce son rituel. Le système apprend et s'adapte continuellement aux sons habituels, minimisant ainsi les alertes consolidées non pertinentes au fil du temps. Ce type de sourdine est particulièrement adapté à des échelles temporelles plus longues, telles que l'échelle de la semaine ou du mois, qu'un système à base de règles peut difficilement appréhender.

Après exécution du programme d'ordinateur 58, le calculateur distant 42 fournit des alertes consolidées et confirmées CAk' qui peuvent alors être transmises à une interface de transmission automatique 66 du serveur de surveillance distant 18, pour l'envoi de chacune de ces alertes consolidées et confirmées CAk' vers un terminal préenregistré d'un utilisateur apte à intervenir, par exemple un membre de l'équipe d'intervention 28, et pour le déclenchement d'une alarme (sonore, visuelle, par messagerie, ...) ou d'une intervention.

On notera que les traitements précités, réalisés par le module fonctionnel d'analyse 60, le module fonctionnel de déduplication 62 et le programme d'ordinateur 58 de mise en sourdine, peuvent être réalisés en parallèle selon une approche distribuée apte à réduire la complexité des calculs. Concrètement, chaque alerte est enregistrée dans une base de données des alertes récentes et confrontée aux autres alertes d'une même fenêtre temporelle et d'une même zone à surveiller. Cela permet une déduplication sans centralisation du traitement, améliorant ainsi l'évolutivité du système.

On notera également que les alertes consolidées et confirmées CAk' peuvent être transmises, à l'interface de transmission automatique 66 puis aux terminaux des membres de l'équipe d'intervention 28, avec des informations contextuelles portant notamment sur les autres alertes éventuelles de leurs groupes respectivement constitués. Par exemple, dans le scénario de la figure 1, seule l'alerte A1 peut être transmise à un membre de l'équipe d'intervention 28 après consolidation et confirmation, avec des informations contextuelles sur les alertes A2 et A3 (« appel au secours également entendu dans la partie privative 30 et dans le couloir 36 »). Dans le scénario de la figure 2, seule l'alerte A1 peut être transmise à un membre de l'équipe d'intervention 28 après consolidation et confirmation, avec des informations contextuelles sur les alertes A2 et A3 (« succession de coups au sol répétée aux instants T2 et T3 et entendus dans la même partie privative 12 »). Dans le scénario de la figure 3, seule l'alerte A1 peut être transmise à un membre de l'équipe d'intervention 28 après consolidation et confirmation, avec des informations contextuelles sur les alertes A2 à A9 (« cri inquiétant répété aux instants T2 et T3, entendus dans la même partie privative 12 mais également dans la partie privative 30 et dans le couloir 36 »).

On notera également que, en variante, toutes les alertes Aj pourraient être transmises à l'interface de transmission automatique 66 puis aux terminaux des membres de l'équipe d'intervention 28, mais en signalant pour celles qui ne sont pas consolidées et confirmées qu'une alerte consolidée et confirmée correspondante est ou a été également transmise à un membre de l'équipe d'intervention 28. Ainsi, chaque membre de l'équipe d'intervention notifié d'une telle alerte non consolidée et confirmée est informé de la redondance des alertes même si aucune action particulière n'est requise de sa part. Par exemple, dans les scénarios des figures 1 et 2, les trois alertes A1, A2, A3 peuvent être transmises à trois membres différents de l'équipe d'intervention 28, seule l'alerte A1 requérant une prise en charge par la personne qui la reçoit, les deux autres n'étant transmises que pour information de redondance. Dans le scénario de la figure 3, les neuf alertes A1 à A9 peuvent être transmises à neuf membres différents de l'équipe d'intervention 28, seule l'alerte A1 requérant une prise en charge par la personne qui la reçoit, les huit autres n'étant transmises que pour information de redondance.

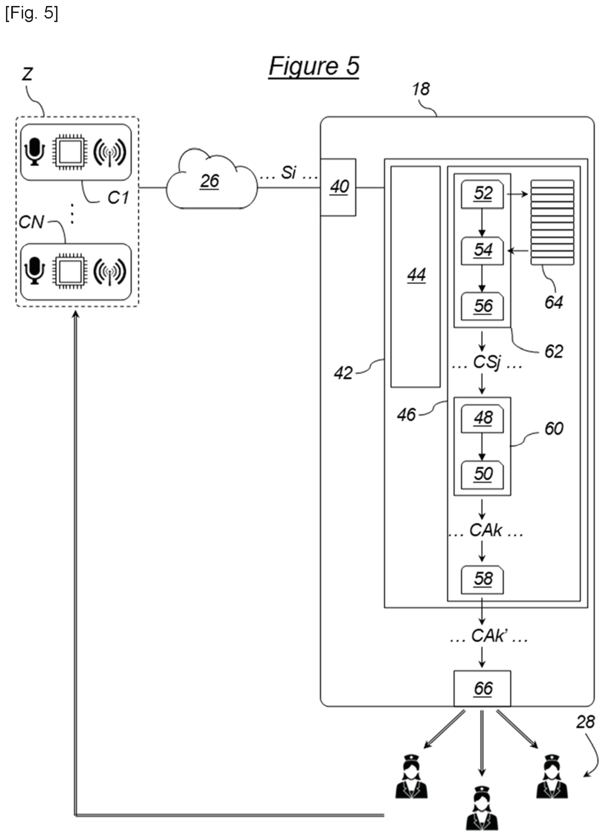

Selon un deuxième mode de réalisation illustré par la figure 5, le serveur de surveillance distant 18 est configuré de façon légèrement différente, de sorte que la chaîne de traitements réalisés par exécution des programmes d'ordinateurs 52, 54 et 56 s'applique avant celle des traitements réalisés par exécution des programmes d'ordinateurs 48 et 50.

Il en résulte que, selon ce deuxième mode de réalisation, ce sont tous les extraits sonores Si reçus par l'interface 40 qui sont traités par le deuxième module fonctionnel logiciel de déduplication 62. Ainsi, par exécution du programme d'ordinateur 52, ils sont accumulés dans la mémoire tampon 64 dans l'une ou plusieurs des fenêtres temporelles prédéterminées mentionnées précédemment. Puis par exécution des programmes d'ordinateurs 54 et 56, des extraits sonores consolidés CSj sont fournis par le deuxième module fonctionnel logiciel de déduplication 62, *a priori* moins nombreux que les extraits sonores Si qu'il a reçus, et surtout beaucoup moins voire même plus du tout redondants.

Bien entendu, si un seul extrait sonore s'accumule dans la mémoire tampon 64, le regroupement et la sélection opérés par exécution des programmes d'ordinateurs 54, 56 sont réduits à leur plus simple expression, i.e. la restitution de cet extrait sonore tel quel en tant qu'extrait sonore consolidé. De même si plusieurs extraits sonores s'accumulent dans la mémoire tampon 64 mais qu'aucun n'est estimé similaire à un autre, le regroupement et la sélection opérés par exécution des programmes d'ordinateurs 54, 56 restituent ces extraits sonores tels quels en tant qu'extraits sonores consolidés.

Les extraits sonores consolidés CSj sont ensuite traités par le premier module fonctionnel d'analyse 60 pour engendrer, le cas échéant, des alertes consolidées CAk, le nombre d'alertes consolidées engendrées étant inférieur ou égal au nombre d'extraits sonores consolidés.

Comme dans le premier mode de réalisation de la figure 4, de façon optionnelle mais avantageuse, le programme d'ordinateur 58 peut être exécuté pour la suppression par mise en sourdine d'au moins une alerte consolidée. Après exécution du programme d'ordinateur 58, le calculateur distant 42 fournit les alertes consolidées et confirmées CAk' qui peuvent alors être transmises à l'interface de transmission automatique 66 du serveur de surveillance distant 18.

On notera que le deuxième mode de réalisation permet d'alléger avantageusement les traitements opérés par le premier module fonctionnel d'analyse 60 en réduisant potentiellement sensiblement le nombre d'extraits sonores fournis en entrée.

On notera également que, en variante, toutes les alertes consolidées CAk pourraient être transmises à l'interface de transmission automatique 66 puis aux terminaux des membres de l'équipe d'intervention 28, mais en signalant pour celles qui ne sont pas confirmées qu'une alerte consolidée et confirmée correspondante est ou a été également transmise à un membre de l'équipe d'intervention 28.

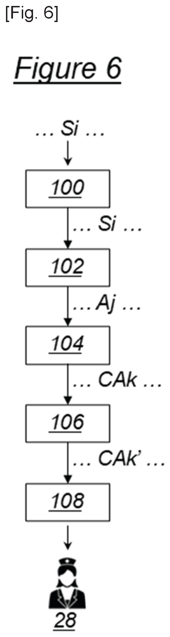

Le fonctionnement du serveur de surveillance distant 18 de la figure 4 va maintenant être détaillé en référence à la figure 6.

Au cours d'une première étape de réception 100 qui est exécutée à chaque instant t, c'est-à-dire continûment, l'interface 40 du serveur de surveillance distant 18 reçoit tous les extraits sonores Si fournis par les capteurs acoustiques des objets communicants C1, ..., CN après traitement par les calculateurs locaux.

Au cours d'une étape d'analyse 102 exécutée à chaque instant et parallèlement à l'étape 100, le premier module fonctionnel d'analyse 60 traite les extraits sonores Si pour engendrer les alertes Aj, par exécution des programmes d'ordinateurs 48 et 50.

Au cours d'une étape de déduplication 104 suivante, le deuxième module fonctionnel de déduplication 62 traite les alertes Aj pour engendrer les alertes consolidées CAk, par exécution successive des programmes d'ordinateurs 52, 54 et 56. Cette déduplication 104 comporte le regroupement d'au moins une partie des alertes Aj engendrées à l'étape 102 en fonction d'au moins un critère de similarité sonore parmi ceux mentionnés précédemment, de manière à constituer un nombre réduit de groupe(s) d'alertes, puis la détermination d'une alerte consolidée pour chaque groupe constitué.

Au cours d'une étape optionnelle de mise en sourdine 106 suivante, les alertes consolidées CAk sont traitées par exécution du programme d'ordinateur 58 pour la fourniture des alertes consolidées et confirmées CAk'.

Enfin, au cours d'une étape de transmission 108, les alertes consolidées et confirmées CAk' sont transmises à l'interface de transmission automatique 66 du serveur de surveillance distant 18, pour l'envoi de chacune de ces alertes consolidées et confirmées CAk' vers un terminal préenregistré d'un utilisateur apte à intervenir, par exemple un membre de l'équipe d'intervention 28, et pour le déclenchement d'une alarme (sonore, visuelle, par messagerie, ...) ou d'une intervention. Comme précisé précédemment, en variante, toutes les alertes Aj peuvent être envoyées, celles n'étant pas consolidées et confirmées pouvant être signalées comme correspondant à une alerte consolidée et confirmée notifiée et peut-être même déjà prise en charge par un autre membre de l'équipe.

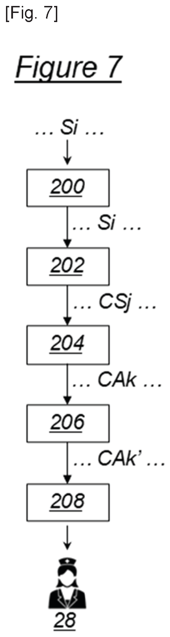

Le fonctionnement légèrement différent du serveur de surveillance distant 18 de la figure 5 va maintenant être détaillé en référence à la figure 7.

Au cours d'une première étape de réception 200 qui est exécutée à chaque instant t, c'est-à-dire continûment, l'interface 40 du serveur de surveillance distant 18 reçoit tous les extraits sonores Si fournis par les capteurs acoustiques des objets communicants C1, ..., CN après traitement par les calculateurs locaux.

Au cours d'une étape de déduplication 202 exécutée à chaque instant et parallèlement à l'étape 200, le deuxième module fonctionnel de déduplication 62 traite les extraits sonores Si pour engendrer les extraits sonores consolidés CSj, par exécution successive des programmes d'ordinateurs 52, 54 et 56. Cette déduplication 202 comporte le regroupement d'au moins une partie des extraits sonores Si en fonction d'au moins un critère de similarité sonore parmi ceux mentionnés précédemment, de manière à constituer un nombre réduit de groupe(s) d'extraits sonores, puis la détermination d'un extrait sonore consolidé pour chaque groupe constitué.

Au cours d'une étape d'analyse 204 suivante, le premier module fonctionnel d'analyse 60 traite les extraits sonores consolidés CSj pour engendrer les alertes consolidées CAk, par exécution des programmes d'ordinateurs 48 et 50.

Au cours d'une étape optionnelle de mise en sourdine 206 suivante, les alertes consolidées CAk sont traitées par exécution du programme d'ordinateur 58 pour la fourniture des alertes consolidées et confirmées CAk'.

Enfin, au cours d'une étape de transmission 208, les alertes consolidées et confirmées CAk' sont transmises à l'interface de transmission automatique 66 du serveur de surveillance distant 18, pour l'envoi de chacune de ces alertes consolidées et confirmées CAk' vers un terminal préenregistré d'un utilisateur apte à intervenir, par exemple un membre de l'équipe d'intervention 28, et pour le déclenchement d'une alarme (sonore, visuelle, par messagerie, ...) ou d'une intervention. Comme précisé précédemment, en variante, toutes les alertes consolidées CAk peuvent être envoyées, celles n'étant pas confirmées pouvant être signalées comme correspondant à une alerte consolidée et confirmée notifiée et peut-être même déjà prise en charge par un autre membre de l'équipe.

Il apparaît clairement qu'un système de surveillance acoustique tel que celui décrit précédemment permet d'éviter efficacement des alertes de type faux positifs, sans nécessiter de moyens de traitements trop complexes.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Système de surveillance acoustique comportant :
- une interface (40) de réception d'une pluralité d'extraits sonores (Si) fournis par au moins un capteur acoustique (20 ; C1, ..., CN) disposé dans une zone à surveiller (Z) ;
- des moyens (60) d'analyse d'extraits sonores (Si ; CSj) pour la génération d'alertes (Aj ;CAk) ;
**caractérisé en ce qu'**il comporte en outre des moyens de déduplication (62) conçus pour:
- regrouper au moins une partie des extraits sonores reçus (Si) ou des alertes (Aj) engendrées par les moyens d'analyse (60) en fonction d'au moins un critère de similarité sonore, de manière à constituer un nombre réduit de groupe(s) d'extraits sonores ou d'alertes ;
- déterminer un extrait sonore consolidé (CSj) ou une alerte consolidée (CAk) pour chaque groupe constitué.

2. Système de surveillance acoustique selon la revendication 1, comportant en outre :
- ledit au moins un capteur acoustique (20 ; C1, ..., CN) disposé dans la zone à surveiller (Z) ; et/ou
- une interface (66) de transmission automatique de chaque alerte issue d'un extrait sonore consolidé (CSj) ou de chaque alerte consolidée (CAk) à un terminal préenregistré d'un utilisateur apte à intervenir.

3. Système de surveillance acoustique selon la revendication 1 ou 2, dans lequel les moyens de déduplication (62) sont conçus pour :
- regrouper plusieurs extraits sonores (Si) ou plusieurs alertes (Aj), provenant de plusieurs capteurs acoustiques (C1, ..., CN) respectivement disposés dans plusieurs lieux distincts (12, 32, 36) de la zone à surveiller (Z), en un même groupe d'extraits sonores ou d'alertes, lorsque lesdits extraits sonores ou lesdites alertes s'étendent en outre dans une même première fenêtre temporelle prédéterminée, par exemple une première fenêtre temporelle de 10 à 20 secondes ; et
- déterminer l'extrait sonore consolidé (CSj) ou l'alerte consolidée (CAk) en sélectionnant, dans chaque groupe constitué, l'extrait sonore ou l'alerte présentant un niveau sonore, un taux de confiance de classification ou un rapport signal sur bruit maximal.

4. Système de surveillance acoustique selon l'une quelconque des revendications 1 à 3, dans lequel les moyens de déduplication (62) sont conçus pour, lorsque plusieurs extraits sonores (Si) ou plusieurs alertes (Aj) issus d'un même et unique capteur acoustique parmi ledit au moins un capteur acoustique (20 ; C1, ..., CN) sont regroupés dans un même groupe constitué dans une deuxième fenêtre temporelle prédéterminée, par exemple une deuxième fenêtre temporelle d'au moins une heure, écarter de la détermination de l'extrait sonore consolidé (CSj) ou de l'alerte consolidée (CAk) de ce groupe tout extrait sonore ou toute alerte autre que celui ou celle émis en premier à partir dudit même et unique capteur acoustique.

5. Système de surveillance acoustique selon l'une quelconque des revendications 1 à 4, dans lequel ledit au moins un critère de similarité sonore appliqué par les moyens de déduplication (62) comporte au moins l'un des éléments de l'ensemble constitué de :
- une proximité spectrale entre extraits sonores en termes d'enveloppes spectrales ;
- une proximité spectrale entre extraits sonores en termes de fréquences caractéristiques ;
- une proximité spectrale entre extraits sonores en termes d'amplitudes fréquentielles ;
- une proximité temporelle entre extraits sonores en termes d'enveloppes temporelles ;
- une proximité temporelle entre extraits sonores en termes d'amplitudes temporelles ; et
- une proximité temporelle entre extraits sonores en termes de durées.

6. Système de surveillance acoustique selon l'une quelconque des revendications 1 à 5, comportant des moyens supplémentaires (58) de suppression d'au moins une alerte issue d'un extrait sonore consolidé (CSj) ou d'au moins une alerte consolidée (CAk), cette suppression résultant de l'application de règles prédéterminées et/ou d'un apprentissage automatique.

7. Système de surveillance acoustique selon l'une quelconque des revendications 1 à 6, dans lequel les moyens de déduplication (62) sont plus précisément conçus pour:
- regrouper au moins une partie des extraits sonores (Si) reçus en fonction dudit au moins un critère de similarité sonore, de manière à constituer un nombre de groupe(s) d'extraits sonores inférieur au nombre d'extraits sonores (Si) reçus ;
- déterminer un extrait sonore consolidé (Csj) pour chaque groupe constitué ; et
- fournir chaque extrait sonore consolidé (CSj) aux moyens d'analyse (60) plutôt que chaque extrait sonore (Si) reçu.

8. Système de surveillance acoustique selon l'une quelconque des revendications 1 à 6, conçu pour fournir tous les extraits sonores (Si) reçus aux moyens d'analyse (60) et dans lequel les moyens de déduplication (62) sont plus précisément conçus pour:
- regrouper au moins une partie des alertes (Aj) engendrées par les moyens d'analyse (60) en fonction dudit au moins un critère de similarité sonore, ce critère de similarité sonore portant sur les extraits sonores analysés générateurs des alertes (Aj), de manière à constituer un nombre réduit de groupe(s) d'alerte(s) ;
- déterminer une alerte consolidée (CAk) pour chaque groupe constitué.

9. Système de surveillance acoustique selon l'une quelconque des revendications 1 à 8, pour N capteurs acoustiques (20 ; C1, ..., CN) disposés dans la zone à surveiller (Z), comportant des moyens de conservation en mémoire (46) d'une matrice de proximité acoustique AP, dont chaque coefficient matriciel AP_{m,n}, où 1≤m≤N et 1≤n≤N, comporte au moins une valeur de probabilité qu'au moins un son prédéterminé émis à proximité du capteur acoustique Cm et principalement capté par celui-ci soit également capté par le capteur acoustique Cn, les moyens de déduplication (62) étant conçus pour exploiter cette matrice de proximité acoustique AP pour écarter de calculs de similarité sonore certains couples de capteurs acoustiques jugés trop éloignés l'un de l'autre au vu du coefficient matriciel correspondant.

10. Procédé de surveillance acoustique, comportant les étapes suivantes :
- réception (100 ; 200) d'une pluralité d'extraits sonores (Si) fournis par au moins un capteur acoustique (20 ; C1, ..., CN) disposé dans une zone à surveiller (Z) ;
- génération (102 ; 204), par des moyens (60) d'analyse d'extraits sonores d'un système de surveillance acoustique, d'alertes (Aj ; CAk) résultant d'au moins une partie d'extraits sonores (Si ; CSj) qu'ils reçoivent ;
**caractérisé en ce qu'**il comporte en outre les étapes suivantes :
- regroupement (104 ; 202), par des moyens de déduplication (62) du système de surveillance acoustique, d'au moins une partie des extraits sonores (Si) reçus ou des alertes (Aj) engendrées par les moyens d'analyse (60) en fonction d'au moins un critère de similarité sonore, de manière à constituer un nombre réduit de groupe(s) d'extraits sonores ou d'alertes ;
- détermination (104 ; 202), par les moyens de déduplication, d'un extrait sonore consolidé (CSj) ou d'une alerte consolidée (CAk) pour chaque groupe constitué.

11. Programme d'ordinateur (48, 50, 52, 54, 56) téléchargeable depuis un réseau de communication et/ou enregistré sur un support (46) lisible par ordinateur et/ou exécutable par un processeur, **caractérisé en ce qu'**il comprend des instructions pour l'exécution des étapes d'un procédé de surveillance acoustique selon la revendication 10, lorsque ledit programme est exécuté par au moins un calculateur (44) d'un système de surveillance acoustique selon l'une quelconque des revendications 1 à 9.
